# EUROPÄISCHE PATENTSCHRIFT

(11) **EP 4 261 422 B1**
(45) Veröffentlichungstag und Bekanntmachung des Hinweises auf die Patenterteilung: **25.11.2026**
(21) Anmeldenummer: 23167373.2
(22) Anmeldetag: 11.04.2023
(51) Int. Cl.: F16B 7/04, F16B 21/00, F16B 2/24, A63H 33/10, F16S 3/04, F16B 3/04, F16B 7/22, F16B 21/07, F16B 21/20

(54) **VERBINDUNGSSYSTEM**
CONNECTION SYSTEM
SYSTÈME DE CONNEXION

(30) Priorität: 13.04.2022 DE 102022109133
(43) Veröffentlichungstag der Anmeldung: 18.10.2023
(73) Patentinhaber: Kisch, Andreas, 73257 Köngen (DE)
(72) Erfinder: Kisch, Andreas, 73257 Köngen (DE)
(74) Vertreter: Daub, Thomas

(56) Entgegenhaltungen:
- FR-A1- 2 349 051
- GB-A- 1 241 762
- US-A- 2 765 580
- US-A- 3 864 049
- US-A1- 2021 259 372

## Beschreibung

### Stand der Technik

Die Erfindung betrifft ein Modellbauverbindungssystem, ein Verbindungsbauteil eines solchen Systems, ein Basisbauteil eines solchen Systems, ein Klemmelement eines solchen Systems und Herstellungsverfahren für solche Verbindungsbauteile, Basisbauteile und Klemmelemente.

Es sind unterschiedliche Verbindungssysteme bekannt, bei denen Basisbauteile mittels Verbindungsbauteilen verbunden werden, wobei die Verbindung jeweils mittels Steckverbindung stattfindet.

Die Druckschrift US 3 864 049 A offenbart ein System aus Konstruktionselementen für große Tragwerke, die zu einer Unterwassermontage vorgesehen sind, das längliche Tragelemente aufweist, die jeweils über Verbindungselemente miteinander in unterschiedlichen Winkeln zueinander befestigbar sind. Die Tragelemente weisen in ihrem Inneren einen Draht auf, der an seinen Enden jeweils Koppelelemente aufweist, über die die Tragelemente mit den kugelförmigen Verbindungselementen verbindbar sind.

Die Druckschrift US 2021/259372 A1 offenbart ein Verbindungssystem zur Erzeugung von verschiedenen geometrischen Strukturen, das Knotenpunkte aufweist, die von mehreren miteinander verbundenen Rohrelementen gebildet sind, wobei die elastischen Verbinder in dem Knotenpunkt über ein Verbindungselement formschlüssig miteinander verbunden sind.

Die Aufgabe der Erfindung besteht insbesondere darin, eine gattungsgemäße Vorrichtung mit verbesserten Eigenschaften hinsichtlich einer hohen Haltekraft, einer geringen Einführkraft, einer werkzeugfreien Lösbarkeit, einer verstellbaren Einstecktiefe (Einführlänge), einem kleinen Bauraum, einer flexiblen Verbindung, einer Nachhaltigkeit (Wiederverwendbarkeit), einer hohen Winkelvielfalt zwischen Basisbauteilen, einer einfachen Herstellung, niedrigen Kosten und/oder einer hohen Ästhetik bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung betrifft ein Modellbauverbindungssystem, aufweisend zumindest zwei, insbesondere zumindest drei, zumindest vier, zumindest fünf, zumindest sechs, zumindest sieben oder zumindest acht, röhrenartig ausgebildete Basisbauteile, die jeweils zumindest eine röhrenartige Ausnehmung aufweisen, und zumindest ein Verbindungsbauteil, das zumindest zwei, insbesondere zumindest drei, zumindest vier, zumindest fünf, zumindest sechs, zumindest sieben oder zumindest acht, Steckelemente aufweist, die jeweils zumindest teilweise aus zumindest einem Draht gebildet sind und die dazu vorgesehen sind, in eine entsprechende der röhrenartigen Ausnehmungen der Basisbauteile eingesteckt zu werden, um die zwei Basisbauteile zumindest mechanisch miteinander zu verbinden, wobei die Steckelemente des Verbindungsbauteils beweglich, insbesondere biegbar, zueinander befestigt und/oder angeordnet sind, wobei die Basisbauteile jeweils zumindest ein Klemmelement aufweisen, das in der zumindest einen röhrenartigen Ausnehmung angeordnet ist und das dazu vorgesehen ist, eines der Steckelemente in der röhrenartigen Ausnehmung kraftschlüssig und/oder formschlüssig zu fixieren und zu verklemmen.

Durch eine derartige Ausgestaltung kann insbesondere ein einfaches Einstecken, insbesondere auf Grund geringer Einsteckkräfte, eine einfache, insbesondere werkzeugfreie Lösbarkeit, eine einstellbare Einführlänge, eine kleinbauende Ausgestaltung, bei der insbesondere das Verbindungsbauteil in eingestecktem Zustand nur minimal sichtbar ist, eine flexible und/oder plastisch verformbare Verbindung, wodurch insbesondere Winkel zwischen den Basisbauteilen einstellbar sind, eine hohe Wiederverwendbarkeit, eine einfache Fertigung, geringe Kosten und/oder eine hohe Ästhetizität und/oder Ästhetik erreicht werden.

Unter einem "Basisbauteil" soll insbesondere ein Bauteil verstanden werden, das dazu vorgesehen ist, alleine oder gemeinsam mit anderen Basisbauteilen einen Raum zumindest teilweise zu füllen, und/oder zumindest teilweise, insbesondere skelettartig, zu umschließen. Insbesondere sind die Basisbauteile zumindest im Wesentlichen starr ausgebildet, weisen also insbesondere eine geringe Verformbarkeit auf. Insbesondere sind die Basisbauteile dazu vorgesehen, zumindest ein Eigengewicht, insbesondere eines gesamten Modells, zumindest im Wesentlichen verformungsfrei zu tragen. Insbesondere ist zumindest eines der Basisbauteile röhrenartig, insbesondere als Röhre, ausgebildet. Beispielsweise ist zumindest eines der Basisbauteile plattenartig ausgebildet. Weiterhin sind Basisbauteile beliebiger Grundformen denkbar. Insbesondere weist zumindest eines der Basisbauteile zumindest zwei röhrenartige Ausnehmungen auf. Insbesondere weist zumindest eines der Basisbauteile eine Vielzahl an röhrenartigen Ausnehmungen zur Aufnahme von Steckelementen auf. Insbesondere ist das Basisbauteil aus zumindest einem Metall, insbesondere aus Kupfer, einer Kupferlegierung, insbesondere Messing, Aluminium und/oder einer Aluminiumlegierung, alternativ aus einem Kunststoff, insbesondere einem Duroplast oder einem Thermoplast, gebildet. Weiterhin ist es denkbar, dass als Grundplatten ausgebildete Basisbauelemente von Gips, Ton, Stein, Holz, Kunststoff, insbesondere Polymer, Faserverbundwerkstoff und/oder ähnlichem gebildet sind. Insbesondere ist eine derartige Grundplatte in einem Urformverfahren, beispielsweise einem 3D-Druck oder einem anderen additiven Verfahren, einem Umformverfahren, einem Trennverfahren und/oder einem Fügeverfahren hergestellt.

Unter einer "röhrenartigen Ausnehmung" soll insbesondere eine Ausnehmung verstanden werden, die sich entlang einer Längserstreckungsrichtung über eine Länge erstreckt, die größer ist, insbesondere um zumindest 100 %, vorteilhaft zumindest 200 %, vorzugsweise zumindest 300 % größer ist, als ein, insbesondere beliebiger, Durchmesser der Ausnehmung quer zur Längserstreckungsrichtung. Insbesondere weist die Ausnehmung zumindest eine in dem Grundbauteil ausgebildete Öffnung auf, durch die sich die Längserstreckungsrichtung erstreckt. Vorzugsweise ist die Ausnehmung zumindest im Wesentlichen hohlzylinderförmig ausgebildet, so dass sie eine kreisrunde Querschnittsform aufweist. Alternativ sind andere Querschnittsformen, insbesondere bezüglich der Längserstreckungsrichtung, wie Rechtecke, insbesondere Quadrate, Dreiecke, andere Vielecke und/oder Ovale denkbar. Insbesondere ist zumindest eine der röhrenartigen Ausnehmungen als Durchgangsloch ausgebildet. Alternativ oder zusätzlich ist zumindest eine der röhrenartigen Ausnehmungen als Sackloch ausgebildet. Insbesondere weisen unterschiedliche Basisbauteile unterschiedliche, insbesondere unterschiedlich geformte, röhrenartige Ausnehmungen auf. Insbesondere kann ein Basisbauteil mehrere unterschiedlich geformte röhrenartige Ausnehmungen aufweisen.

Unter einem Verbindungsbauteil soll insbesondere ein Bauteil verstanden werden, das dazu vorgesehen ist, zumindest zwei, insbesondere zumindest drei, zumindest vier, zumindest fünf, zumindest sechs, zumindest sieben oder zumindest acht, Basisbauteile unmittelbar, also insbesondere ohne den Einsatz weiterer Verbindungsbauteile, miteinander zu verbinden. Insbesondere weist das Verbindungsbauteil, insbesondere zumindest die Steckelemente, eine höhere Verformbarkeit auf als die Basisbauteile. Vorzugsweise ist zumindest eines, vorzugsweise alle, der Verbindungsbauteile baulich getrennt von Basisbauteilen ausgebildet. Alternativ oder zusätzlich ist es denkbar, dass zumindest eines der Verbindungsbauteile dauerhaft und/oder werkzeuglos unlösbar und/oder zerstörungsfrei untrennbar mit einem oder mehreren Basisbauteilen verbunden ist und eines oder mehrere Steckelemente des Verbindungsbauteils dazu vorgesehen sind, das Verbindungsbauteil mit weiteren Basisbauteilen zu verbinden.

Unter einem Draht soll insbesondere ein mit Handkraft kaltverformbarer Materialstrang verstanden werden, der eine Länge und eine größte Querausdehnung senkrecht zur Länge aufweist, so dass die Länge einem Vielfachen, insbesondere zumindest einem 10-fachen, beispielsweise zumindest einem 20-fachen, der Quererstreckung entspricht. Insbesondere weist der Draht einen zumindest im Wesentlichen runden Querschnitt auf. Alternativ ist es denkbar, dass der Draht nicht-runde Querschnitte aufweist. Insbesondere weist der Draht einen Querschnitt, insbesondere rundäquivalent, also bezogen auf einen runden Draht mit gleicher Querschnittsfläche, zwischen 0,25 mm und 2 mm auf. Vorzugsweise ist der Draht aus einem Metall, insbesondere Kupfer, einer Kupferlegierung, insbesondere Messing und/oder Bronze, Eisen, einer Eisenlegierung, insbesondere "Bindedraht", Aluminium, einer Aluminiumlegierung, einem Edelmetall bzw. Schmuckmetall, insbesondere Gold oder Silber und/oder einer Kombination oder Legierung dieser, gebildet.

Unter einem Klemmelement soll insbesondere ein Element verstanden werden, das dazu vorgesehen ist, ein Steckelement in der röhrenartigen Ausnehmung, insbesondere formschlüssig und/oder kraftschlüssig, zu verklemmen. Insbesondere ist das Klemmelement dabei dazu vorgesehen, das Steckelement gegen eine Wandung der röhrenartigen Ausnehmung zu pressen. Alternativ ist es denkbar, dass das Klemmelement zwei oder mehr, insbesondere zwischen zwei und fünf, Klemmbacken aufweist, wobei das Klemmelement dazu vorgesehen ist, das Steckelement zwischen den Klemmbacken einzuklemmen. Vorzugsweise ist das Klemmelement dazu vorgesehen, das Steckelement primär mittels Formschlusses zu halten. Eine reine kraftschlüssige Halterung ist alternativ jedoch auch denkbar.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Weiterhin wird vorgeschlagen, dass zumindest eines der Steckelemente einen Klemmbereich aufweist, der von einer Verdrillung von zwei oder mehr miteinander verdrillten Drahtbereichen des zumindest einen Drahts gebildet ist. Unter einer "Verdrillung" von Drahtbereichen soll insbesondere verstanden werden, dass zumindest einer der Drahtbereiche einen anderen der Drahtbereiche, insbesondere den anderen Drahtbereich umwickelt und/oder helixförmig umschließt. Insbesondere liegen in der Verdrillung die Drahtbereiche jeweils eng, insbesondere abstandsfrei, zu mindestens einem anderen der Drahtbereiche vor. Vorzugsweise umwickeln und/oder umschließen sich die zwei oder mehr Drahtbereiche gegenseitig, vorzugsweise helixförmig. Hierdurch kann vorteilhaft eine hohe Stabilität des Steckelements und eine hohe Haltekraft der Steckverbindung mit dem Basisbauteil erreicht werden. Weiterhin kann durch die Symmetrie der Helix eine Verdrehbarkeit und eine Unabhängigkeit der Haltewirkung von einem Verdrehwinkel erreicht werden.

Alternativ kann das Steckelement einen Klemmbereich aufweisen, der von einem einzelnen oder mehreren, insbesondere parallelen, Drahtbereichen gebildet ist, und der frei ist von Verformungen und/oder der auf andere Weise als verdrillt verformt ist, um Formschlussmittel bereitzustellen. Beispielsweise könnte der Klemmbereich eine wellenartige Verformung, insbesondere mit Sinusprofil oder Sägezahnprofil, aufweisen. Insbesondre könnte der Klemmbereich auch von einem einzelnen Drahtbereich gebildet sein, der helixartig geformt ist.

Gemäß einer weiteren Ausgestaltung kann das Klemmelement zumindest eine flexible Zunge aufweisen, die dazu vorgesehen ist, bei Einführung des Steckelements lateral, insbesondere quer und/oder senkrecht zu Steckrichtung, ausgelenkt zu werden. Dies erlaubt die einfache Erzeugung einer Klemmkraft zur Halterung des Steckelements in dem Basisbauteil. Insbesondere führt die laterale Auslenkung zu einer Verkippung und/oder Verdrehung der flexiblen Zunge, insbesondere um einen Anschlagpunkt der flexiblen Zunge an dem Basisbauteil, so dass beispielsweise die Anschlagkante lateral ausgelenkt wird.

Vorzugsweise weist die flexible Zunge eine Anschlagkante auf, die derart abgewinkelt und angeordnet ist, dass diese in einen durch die Verdrillung der Drahtbereiche erzeugten Gewindegang eingreift. Insbesondere ist die Anschlagkante von einer Öffnung der röhrenartigen Ausnehmung abgewandt, so dass diese bei einem Herausziehen des Steckelements dem Herausziehen entgegenwirkt. Hierdurch kann vorteilhaft eine Formschlussverbindung hergestellt werden, die insbesondere eine hohe Haltekraft ermöglicht.

Gemäß alternativen Ausgestaltungen kann die flexible Zunge eine Anschlagkante aufweisen, die derart abgewinkelt und/oder angeordnet ist, dass diese in durch das Steckelement bereitgestellte Formschlussmittel eingreift.

Ferner wird vorgeschlagen, dass die zwei Drahtbereiche, die gemeinsam den Klemmbereich zumindest eines der Steckelemente bilden, von einem gleichen Drahtstück gebildet sind. Insbesondere ist der Klemmbereich von einem einzelnen Drahtstück gebildet, wobei das Drahtstück bei einer Herstellung derart gebogen wird, dass die zwei Drahtbereiche nebeneinander und/oder parallel zueinander liegen. Hierdurch kann insbesondere eine hohe Stabilität des Steckelements erreicht werden.

Weiterhin wird vorgeschlagen, dass das Steckelement einen Führungsbereich aufweist, der an einem äußeren Ende des Steckelements angeordnet ist und in dem der zumindest eine Draht unverdrillt vorliegt. Hierdurch kann insbesondere eine geringere Baugröße erreicht werden, was ein Einführen des Steckelements in die röhrenartige Ausnehmung vereinfacht.

Gemäß einer weiteren Ausgestaltung wird vorgeschlagen, dass die zwei Steckelemente zumindest einen gemeinsamen Draht aufweisen. Insbesondere sind die Steckelemente mittels des gemeinsamen Drahts miteinander verbunden. Insbesondere weisen benachbarte Steckelemente des Verbindungsbauteils jeweils einen gemeinsamen Draht auf. Hierdurch kann insbesondere eine hohe Stabilität des Verbindungsbauteils erreicht werden.

In einer bevorzugten Ausgestaltung weist das Verbindungsbauteil genau einen Draht auf und/oder ist von diesem gebildet. Hierdurch kann insbesondere eine einfache Fertigung und/oder eine hohe Stabilität erreicht werden. Insbesondere sind Enden des Drahts miteinander verschweißt, verklebt und/oder verstemmt, so dass der Draht als geschlossene Schlaufe vorliegt. Alternativ ist es denkbar, dass der Draht von einem Ring gebildet ist, der bspw. von einem Rohr großen Umfangs abgetrennt ist.

Weiterhin wird vorgeschlagen, dass zumindest einige der Basisbauteile als Rohre, insbesondere als Rundrohre und/oder als Profilrohre, ausgebildet sind. Hierdurch kann insbesondere eine hohe Stabilität und/oder ein geringes Gewicht des resultierenden Modells erreicht werden. Insbesondere entspricht ein Profil der jeweiligen röhrenartigen Ausnehmung einem Profil des Rohres.

Insbesondere ist es denkbar, dass das Verbindungssystem eine Vielzahl von Rohren mit unterschiedlichen Profilen aufweist.

Weiterhin wird vorgeschlagen, dass zumindest eines der Basisbauteile als Grundplatte ausgebildet ist. Als "Grundplatte" soll insbesondere eine ebene oder profilierte Basisstruktur verstanden werden, auf der ein von dem Verbindungssystem gebildetes Modell gelagert ist.

Gemäß einer weiteren Ausgestaltung wird vorgeschlagen, dass die röhrenartige Ausnehmung einen nach außen hin, also insbesondere Richtung Rohrende hin, kleiner werdenden Innenquerschnitt aufweist. Insbesondere ist eine Öffnung der röhrenartigen Ausnehmung nach außen hin abgerundet. Hierdurch kann insbesondere ein Herausrutschen des Klemmelements vermieden und/oder eine Haltekraft erhöht werden. Weiterhin kann eine verbesserte Ästhetik erreicht und/oder ein Verletzungsrisiko verringert werden.

In einer bevorzugten Ausgestaltung wird vorgeschlagen, dass die zwei Steckelemente des Verbindungbauteils beweglich, insbesondere biegbar, zueinander befestigt und/oder angeordnet sind, wobei insbesondere ein kleinster einstellbarer Öffnungswinkel zwischen den zwei Steckelementen kleiner ist als 30 °, insbesondere kleiner ist als 20 °, vorteilhaft kleiner ist als 10 °. Insbesondere sind die Steckelemente eines Verbindungsbauteils starr miteinander verbunden. Alternativ ist es denkbar, dass die Steckelemente eines Verbindungsbauteils kettenartig und/oder schlüsselbundartig miteinander verbunden sind. Hierdurch kann insbesondere eine hohe Flexibilität bei einer Verbindung der Basisbauteile erreicht werden.

Weiterhin kann das Klemmelement kraft- und/oder formschlüssig in der röhrenartigen Ausnehmung des Basisbauteils fixiert sein. Insbesondere weist das Klemmelement Federflügel auf, die dazu vorgesehen sind, gegen Wandungen der röhrenartigen Ausnehmung zu pressen und so das Klemmelement in dem Basisbauteil zu halten. Insbesondere weisen die Federflügel Kanten, insbesondere Schneidkanten auf, die dazu vorgesehen sind, ein Zurückrutschen des Klemmelements aus der röhrenartigen Ausnehmung heraus zu vermeiden, insbesondere indem sich diese in eine Wandung der röhrenartigen Ausnehmung einschneiden. Hierdurch kann insbesondere eine hohe Stabilität und eine einfache Herstellung erreicht werden.

Vorzugsweise ist das Klemmelement aus einem härteren Material, insbesondere einem Federwerkstoff, vorzugsweise einem Federstahl, insbesondere Chrom-Nickel-Stahl, einer Federbronze, Kupferberyllium und/oder einer titan- und/oder nickelbasierten Legierung. Gemäß alternativen Ausgestaltungen kann das Klemmelement einstückig mit dem Basisbauteil ausgebildet sein. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Verbindungssystem in einem montierten Zustand in einer teilweisen Schnittdarstellung,
- Fig. 2: ein erfindungsgemäßes Verbindungsbauteil,
- Fig. 3: ein erfindungsgemäßes Verbindungsbauteil,
- Fig. 4: a) - c) zwei verschiedene Herstellverfahren für ein erfindungsgemäßes Verbindungsbauteil,
- Fig. 5: den Bewegungsspielraum eines erfindungsgemäßen Verbindungsbauteils,
- Fig. 6: ein erfindungsgemäßes Klemmelement in einer Seitenansicht,
- Fig. 7: das Klemmelement in einer Aufsicht,
- Fig. 8: zwei erfindungsgemäße Klemmelemente in einem erfindungsgemäßen Basisbauteil,
- Fig. 9: das Klemmelement in einer Frontalansicht vor einer Einführung in das Basisbauteil,
- Fig. 10: das Klemmelement in einer Frontalansicht nach der Einführung in das Basisbauteil,
- Fig. 11: das Klemmelement in einer Rückansicht in einem montierten Zustand des Systems in einer Schnittdarstellung
- Fig. 12: eine kavaliersperspektivische Ansicht eines zurechtgebogenen erfindungsgemäßen Verbindungsbauteils,
- Fig. 13: eine kavaliersperspektivische Ansicht des zurechtgebogenen Verbindungsbauteils mit montierten Basisbauteilen,
- Fig. 14: eine Detailansicht des Verbindungsbauteils aus Figur 13,
- Fig. 15: ein Modell aus mehreren Verbindungsbauteilen und mehreren Basisbauteilen in einer Explosionsdarstellung,
- Fig. 16: das Modell aus Figur 15 in montiertem Zustand,
- Fig. 17: a) - c) Aufsicht, Schnittansicht und schräge Schnittansicht eines erfindungsgemäßen Basisbauteils mit einstückig ausgebildetem Klemmelement,
- Fig. 18: a) und b) Seitenansicht und schräge Ansicht eines erfindungsgemäßen Klemmelements und
- Fig. 19: a) - c) einen Einsteckvorgang eines Steckelements eines erfindungsgemäßen Verbindungsbauteils in ein mit einem erfindungsgemäßen Klemmelement versehenen erfindungsgemäßen Basisbauteil.

### Beschreibung der Ausführungsbeispiele

In den Figuren wurden der besseren Übersichtlichkeit halber von mehrmals vorkommenden gleichen Bestandteilen jeweils nur ein Teil mit Bezugszeichen versehen - zu nicht bezeichneten Bestandteilen wird hierbei grundsätzlich auf die mit Bezugszeichen versehenen Bestandteile der gleichen oder anderen der Zeichnungen verwiesen.

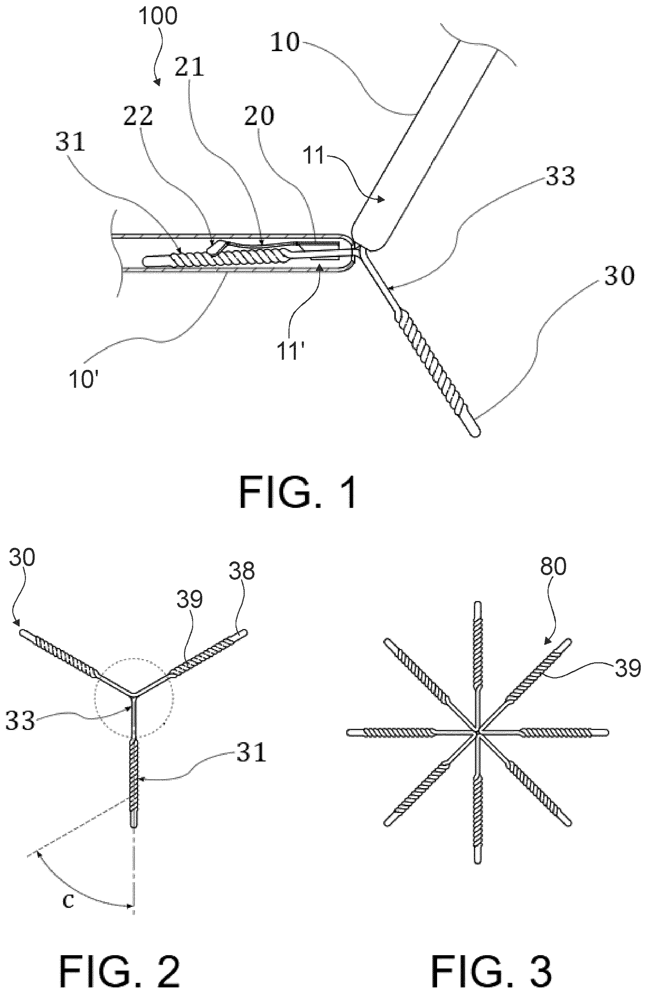

Die Figur 1 zeigt ein Verbindungssystem 100. Das Verbindungssystem 100 ist ein Modellbauverbindungssystem.

Das Verbindungssystem 100 weist zumindest zwei Basisbauteile 10, 10' auf, die jeweils zumindest eine röhrenartige Ausnehmung 11, 11' aufweisen. Eines der Basisbauteile 10' ist hierbei in einer Schnittdarstellung zu sehen, während ein anderes der Basisbauteile 10 in einer Aufsicht zu sehen ist. Die Basisbauteile 10, 10' sind als Rohre ausgebildet. Die Basisbauteile 10, 10' sind im vorliegenden Beispiel als Rundrohre ausgebildet, können alternativ aber auch als Profilrohre, insbesondere mit beliebigem Profil vorliegen. Die Basisbauteile 10, 10' weisen einen Außendurchmesser von etwa 3 mm auf. Gemäß anderen Ausgestaltungen können die Basisbauteile 10, 10' Durchmesser zwischen 2 mm und 10 mm, insbesondere zwischen 2,5 mm und 4 mm aufweisen. Es sind aber auch Ausgestaltungen mit größeren Durchmessern denkbar.

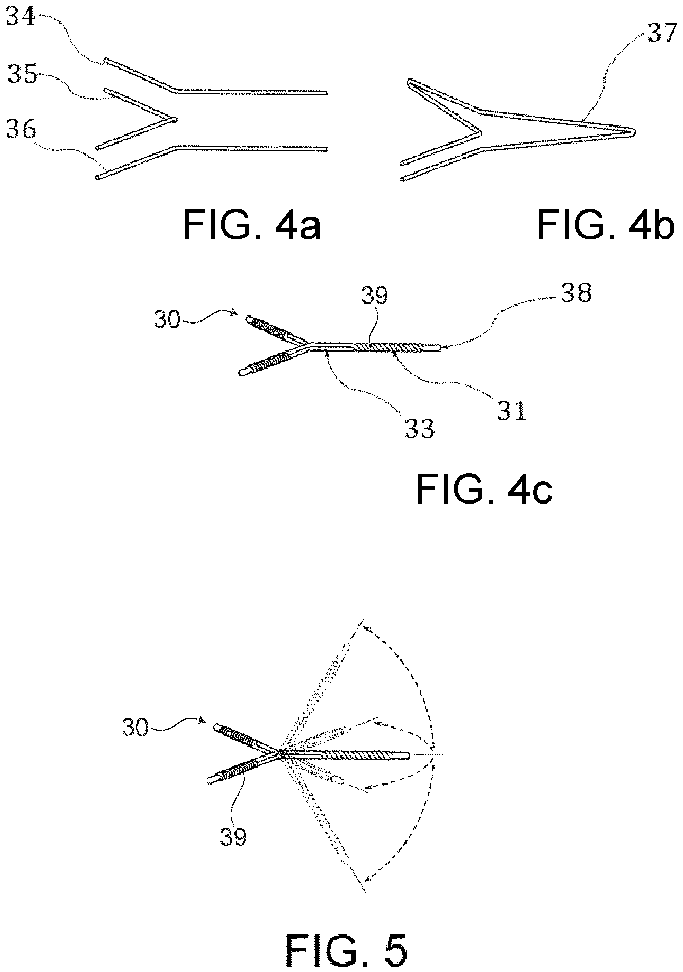

Das Verbindungssystem 100 weist weiterhin zumindest ein Verbindungsbauteil 30 auf. Das Verbindungsbauteil 30 weist zumindest zwei, hier drei, Steckelemente 39 (im Weiteren auch Verbindungsarm) auf (vgl. auch Figur 2). Die Steckelemente 39 sind jeweils zumindest teilweise aus zumindest einem Draht 34, 35, 36, 37 gebildet (vgl. Figuren 4a - 4c). Die Steckelemente 39 sind jeweils dazu vorgesehen, in eine entsprechende der röhrenartigen Ausnehmungen 11, 11' der Basisbauteile 10, 10' eingesteckt zu werden, um die zwei Basisbauteile 10, 10' zumindest mechanisch miteinander zu verbinden.

Die Basisbauteile 10, 10' weisen jeweils zumindest ein Klemmelement 20 auf, das in der zumindest einen röhrenartigen Ausnehmung 11, 11' angeordnet ist und das jeweils dazu vorgesehen ist, eines der Steckelemente 39 in der röhrenartigen Ausnehmung 11, 11' kraftschlüssig und/oder formschlüssig zu fixieren.

Zumindest eines der Steckelemente 39 weist einen Klemmbereich 31 auf. In dem Klemmbereich 31 ist das Steckelement 39 spiralförmig ausgebildet. Der Klemmbereich 31 ist von einer Verdrillung von zwei miteinander verdrillten Drahtbereichen des zumindest einen Drahts 34, 35, 36, 37 gebildet (vgl. Figuren 4a - 4c).

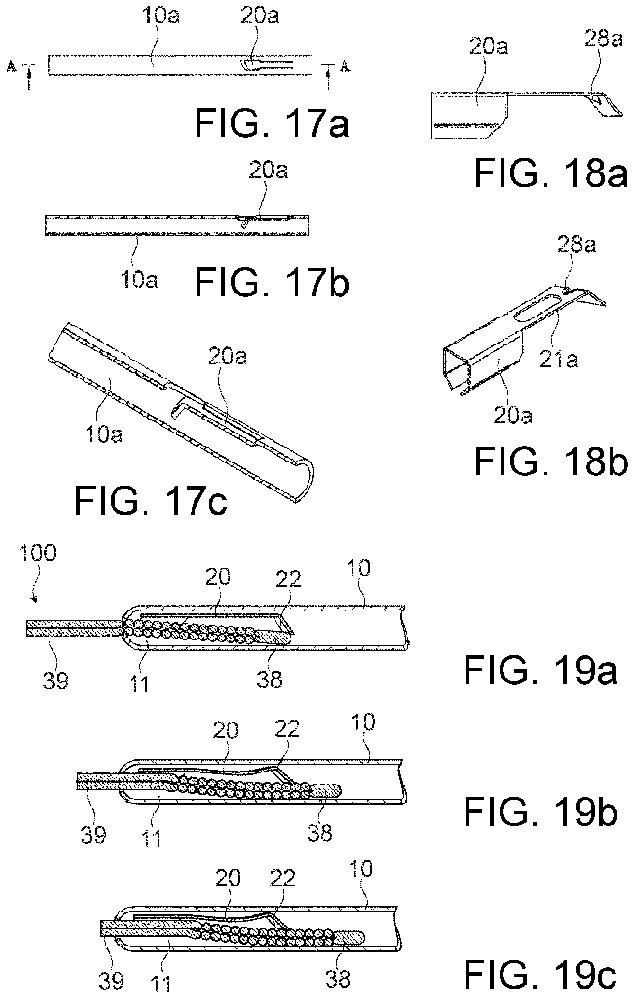

Das Klemmelement 20 weist zumindest eine flexible Zunge 22 (auch Klemmflügel genannt) auf, die dazu vorgesehen ist, bei Einführung des Steckelements 39 lateral, insbesondere senkrecht zu Steckrichtung, und/oder transversal, insbesondere in Steckrichtung, ausgelenkt zu werden (vgl. auch Figuren 19a - 19c).

Die flexible Zunge 22 weist eine Anschlagkante 24 (auch Klemmkontur genannt) auf, die derart abgewinkelt und angeordnet ist, dass diese in einen durch die Verdrillung der Drahtbereiche erzeugten Gewindegang in dem Klemmbereich 31 eingreift.

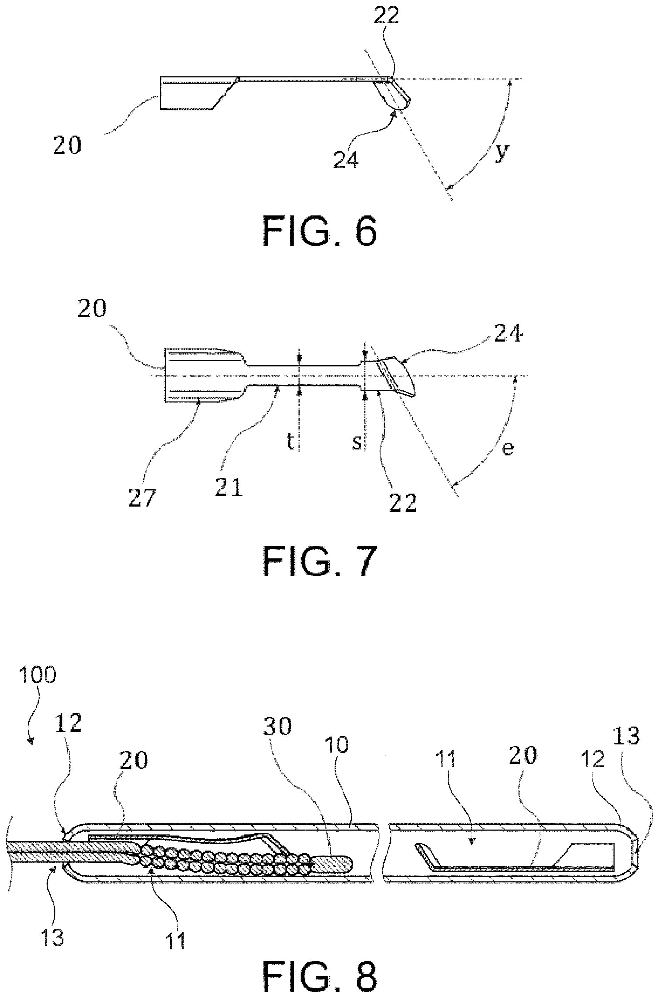

Das Klemmelement 20 weist einen Fixierbereich 27 auf, der dazu vorgesehen ist, das Klemmelement 20 in der röhrenartigen Ausnehmung 11, 11' im Basisbauteil 10, 10' zu fixieren (vgl. Fig. 6 und 7). An den Fixierbereich 27 schließt sich die flexible Zunge 22 an. Die flexible Zunge 22 weist einen starren Klemmflügel auf und einen elastisch verformbaren Bereich 21, der den Klemmflügel mit dem Fixierbereich 27 verbindet. Das Klemmelement 20 ist aus einem Stück gefertigt. Beispielsweise ist das Klemmelement 20 per Stanz- und/oder Faltverfahren aus einem Blech gefertigt.

Der Klemmflügel der flexiblen Zunge 22 ist angepasst an die Geometrie des Klemmbereichs 31 des Steckelements 39. Der Klemmflügel ist starr ausgeführt (darf sich nicht verbiegen). Dies wird dadurch erreicht, dass das Klemmelement 20 in dem elastisch verformbaren Bereich 21 eine geringere Materialstärke, hier insbesondere eine geringere Breite t aufweist als eine Breite s im Bereich des Klemmflügels. Alternativ ist eine Verstärkung eines Klemmflügels eines Klemmelements 20a durch eine Verstärkungsrippe 28a (kaltverformt) und/oder eine Ausbildung des elastisch verformbaren Bereichs 21a aus mehreren Stegen statt nur einem Steg, denkbar (vgl. Fig. 18a, 18b). Weiterhin ist es denkbar, dass die Materialstärke des Klemmflügels gegenüber der des elastisch verformbaren Bereichs 21 durch eine mehrschichtige Ausgestaltung des Klemmflügels und/oder die Verwendung von einer höheren Materialdicke im Bereich des Klemmflügels erreicht wird. An dem Klemmflügel ist die Anschlagkante 24 ausgebildet. Die Anschlagkante 24 weist einen Kantenwinkel e in Bezug zu einer Einsteckrichtung und/oder einem Längsverlauf des Klemmelements 20 oder der röhrenartigen Ausnehmung 11, 11' auf. Der Kantenwinkel e beträgt typischer Weise 60 °, wobei auch andere Winkel denkbar sind. Die flexible Zunge 22 kann zur Herstellung des Kantenwinkels e einen scharfen Knick aufweisen oder alternativ eine abgerundete Biegung.

Die flexible Zunge 22 kann im Bereich der Anschlagkante 24 einen Anstellwinkel y in Bezug zu einer Einsteckrichtung und/oder einem Längsverlauf des Klemmelements 20 oder der röhrenartigen Ausnehmung 11, 11' aufweisen. Der Anstellwinkel y liegt insbesondere in einem Bereich zwischen 30 ° und 90 °, so dass die Einführkraft des Verbindungsbauteils 30, insbesondere des Steckelements 39, in das Basisbauteil 10, 10' klein ist, die Haltekraft jedoch hoch ist und gegen ein Herausziehen sichert.

Die Steckelemente 39 weisen jeweils einen Führungsbereich 38 auf, der an einem äußeren Ende des Steckelements 39 angeordnet ist und in dem der zumindest eine Draht 34, 35, 36, 37 unverdrillt vorliegt. Um eine Verletzungsgefahr zu reduzieren, kann eine Spitze des Führungsbereichs 38 mit einem Harz oder einer Gummierung versehen sein, oder der Führungsbereich 38 kann mechanisch abgerundet sein. Zumindest einer der Führungsbereiche 38 kann von einer Kehre des Drahts 37 gebildet sein, aus dem der Klemmbereich 31 gebildet ist (vgl. Figur 4b). Zumindest einer der Führungsbereiche 38 kann von zwei Drahtenden gebildet sein, wobei die Drahtenden beispielsweise frei vorliegen, oder alternativ miteinander verlötet oder verschweißt sind (vgl. Figur 4a).

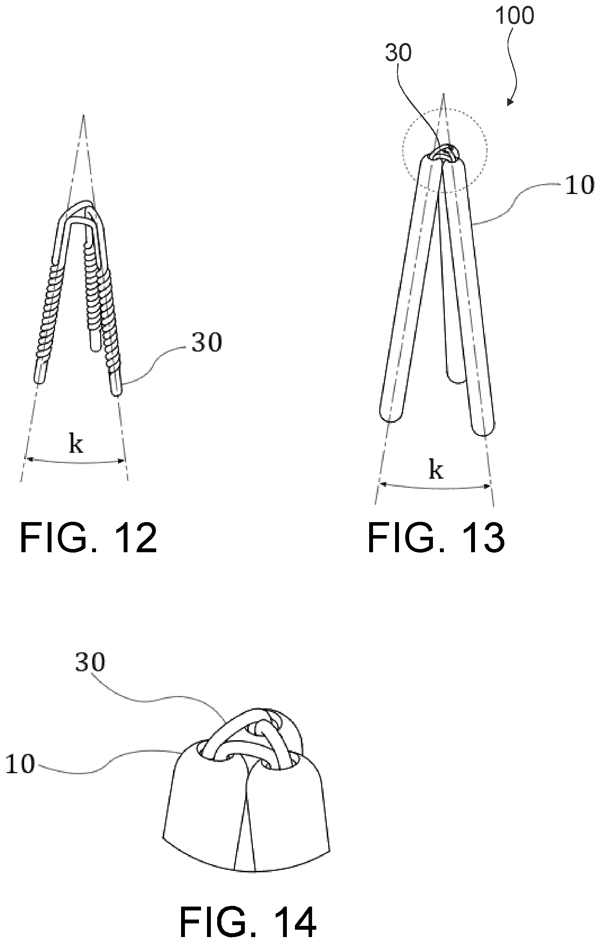

Die Steckelemente 39 des Verbindungsbauteils 30 sind beweglich, insbesondere biegbar, zueinander befestigt und/oder angeordnet. Ein kleinster einstellbarer Öffnungswinkel zwischen den Steckelementen 39 ist hierbei kleiner als 30 ° (vgl. insbesondere Figuren 12 - 14). Die Steckelemente 39 können zumindest in einem Auslieferungszustand sternförmig, insbesondere mit gleichmäßigen Winkelabständen, angeordnet sein, wobei sich die Steckelemente 39 in einem zentralen Bereich 33 treffen. In dem zentralen Bereich 33 liegt die Steckelemente 39 bildender Draht 34, 35, 36, 37 unverdrillt vor, um ein einfaches Zurechtbiegen der Steckelemente 39 und eine einfache Einstellung von benötigten Winkeln k zwischen den Steckelementen 39 zu ermöglichen. Im zentralen Bereich 33 sind die Drähte 34, 35, 36, 37 nicht verbunden. Spitze Winkel k werden ermöglicht, insbesondere dadurch, dass sich die im zentralen Bereich 33 nicht verbundenen Drähte 34, 35, 36, 37 gegeneinander verschieben und/oder gegeneinander öffnen können (vgl. Fig. 12 - 14). Durch ein enges Anliegen der dünnen Drähte 34, 35, 36 ist die Verbindung von außen betrachtet kleinbauend und minimal sichtbar. Wie in Figur 5 angedeutet, können zwischen zwei benachbarten Steckelementen 39 beinahe beliebige Winkel k eingestellt werden.

Es werden hier mehrere Verfahren zur Herstellung der Verbindungsbauteile 30 (vgl. auch Figur 4c) dargestellt und beschrieben. Gemäß Figur 4a werden für ein Verbindungsbauteil mit N (hier 3) Steckelementen 39 eine Anzahl von N Drähte 34, 35, 36 verwendet. Die Drähte 34, 35, 36 sind jeweils einmal gebogen bzw. geknickt, wobei ein so gebildeter Knick zwischen zwei Schenkeln des jeweiligen Drahts 34, 35, 36 liegt. Jeweils zwei der Drähte 34, 35, 36 werden so angeordnet, dass deren Schenkel parallel und insbesondere aneinander liegen. Die zwei Drähte 34, 35, 36 werden nun miteinander verdrillt, um den entsprechenden Klemmbereich 31 zu bilden. Hierzu werden die Drähte 34, 35, 36 im zentralen Bereich 33 und im Führungsbereich 38 jeweils gemeinsam eingespannt. Zur Einspannung des zentralen Bereichs 33 und des Führungsbereichs 38 verwendete Vorrichtungen werden nun gegeneinander um eine Achse, die im Wesentlichen parallel zu den Drähten 34, 35, 36 im Klemmbereich 31 liegt, gedreht, um die Drähte 34, 35, 36 zu verdrillen. Anschließend werden die den jeweiligen Führungsbereich 38 bildenden Drahtenden miteinander verpresst und/oder abgerundet. Im Führungsbereich 38 (an den Enden der Arme des Verbindungsbauteils 30) kann ein verstemmter Bereich ausgebildet sein, um die Enden der Drähte 34, 35, 36 zu verbinden und die Einführung in die röhrenartige Ausnehmung 11, 11' zu vereinfachen. Die Verdrillung/die Spirale im Klemmbereich 31 weist einen Steigungswinkel c auf (vgl. Fig. 2). Der Steigungswinkel c entspricht dem Kantenwinkel e des Klemmelements 20 (vgl. Figur 7).

Zwei benachbarte Steckelemente 39 weisen hierbei also jeweils einen gemeinsamen Draht 34, 35, 36 auf. Hierbei weist jedes der Steckelemente 39 mit jeweils zwei anderen der Steckelemente 39 einen gemeinsamen Draht 34, 35, 36 auf.

Eine Ausdehnung (Länge) des Klemmbereichs 31 ist so dimensioniert, dass das Steckelement 39 in unterschiedlicher Tiefe verklemmt werden kann (vgl. Fig. 19a - 19c). Insbesondere beträgt eine Länge des Klemmbereichs 31 zwischen 5 mm und 30 mm, insbesondere zwischen 8 mm und 15 mm.

In Fig. 4b ist ein alternativer Ansatz zur Herstellung gezeigt. Ein einzelner Draht 37 wird hierbei zu einer Sternform mit spitzen Zacken gebogen. Zwei Enden des Drahts 37 treffen sich hierbei in einer Spitze einer der Zacken. Alternativ kann der Draht 37 auch eine ununterbrochene/geschlossene Schlaufe sein, die zu der Sternform gebogen wird. Anschließend werden jeweils zwei Drahtabschnitte, die gemeinsam eine Zacke des Sterns bilden, miteinander verdrillt. Die zwei Drahtbereiche der Verdrillung sind also von einem gleichen Drahtstück gebildet. Das Verbindungsbauteil 30 weist hierbei also genau einen Draht 37 auf.

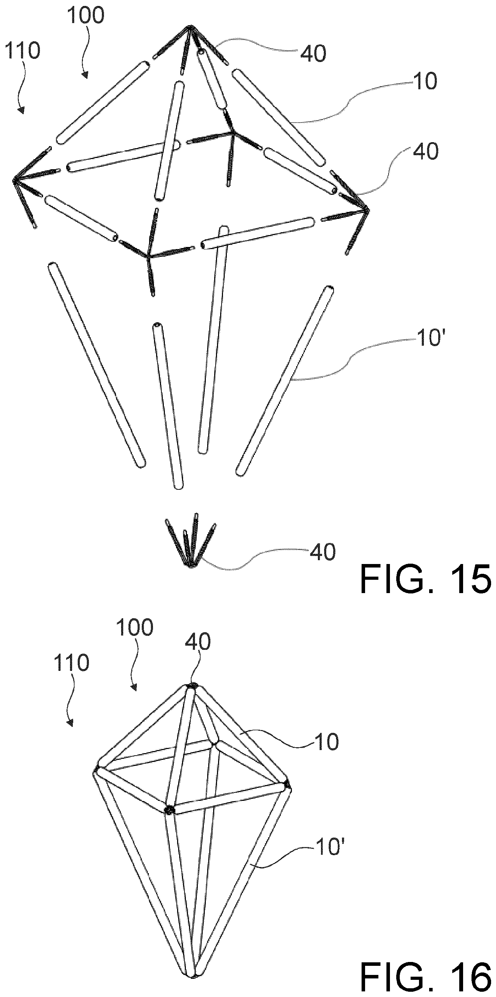

Auf diese Weise sind Verbindungsbauteile 30, 40, 80 mit nahezu beliebiger Anzahl, insbesondere ein bis zwanzig, vorzugsweise drei bis acht, Steckelementen 39 herstellbar. Figur 3 zeigt beispielsweise ein Verbindungsbauteil 80 mit acht Steckelementen 39 und Figuren 15 und 16 zeigen beispielsweise ein entsprechendes Verbindungsbauteil 40 mit vier Steckelementen.

Weiterhin sind Zwischenvarianten der beiden Verfahren denkbar, wobei für ein Verbindungsbauteil mit N Steckelementen mehr als ein Draht und weniger als N Drähte Verwendung finden.

Weiterhin sind Varianten denkbar, bei denen das jeweilige Steckelement aus drei oder mehr übereinanderliegenden Drähten und/oder Drahtsegmenten/Drahtabschnitten gefertigt ist, die insbesondere miteinander verdrillt sind. Eine Ausgestaltung mit zwei oder mehr verdrillen Drähten oder Drahtabschnitten führt zu einer hohen Biege-Dauerfestigkeit, insbesondere durch größere Biegeradien, wenn die Verbindungsarme/Steckelemente zueinander verdreht werden und sich plastisch verformen.

Gemäß einer weiteren Alternative ist es denkbar, dass ein Steckelement einen Klemmbereich aufweist, der von einem einzelnen Drahtstrang gebildet ist, insbesondere durch Einprägung einer Gewindekontur oder durch Ausformen einer hohlen Helix. Beispielsweise können Steckelemente, die jeweils von einem Draht in Form eines Einzelstrangs gebildet sind, im zentralen Bereich, insbesondere am Mittelpunkt des Verbindungsbauteils, gefügt sein.

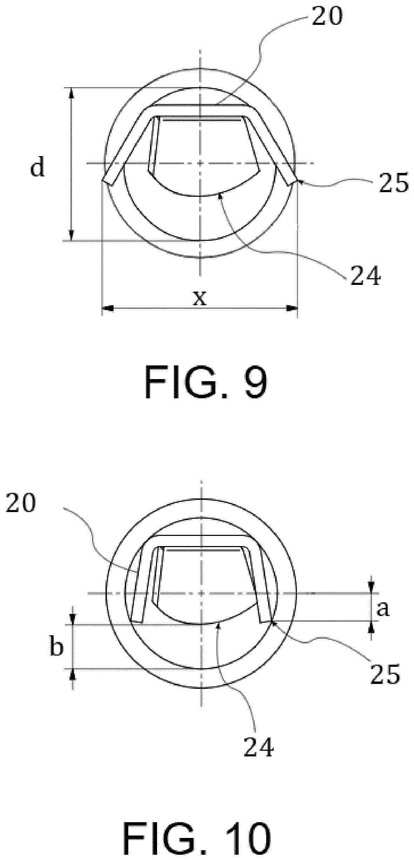

Das Klemmelement 20 ist kraft- und formschlüssig in der röhrenartigen Ausnehmung 11, 11' des jeweiligen Basisbauteils 10, 10' fixiert (vgl. Fig. 9 und 10). Der Fixierbereich 27 des Klemmelements 20 weist ein U-förmiges Profil 25 (auch Fixierkontur genannt) auf, wobei die Auslaufenden jeweils einen Federflügel bilden. Vor einem Einführen des Klemmelements 20 in das Basisbauteil 10 10' sind die Federflügel des Fixierbereichs 27 des Klemmelements 20 derart abgewinkelt, dass das U-förmige Profil 25 in einer Projektion auf die röhrenartige Ausnehmung 11, 11' über diese herausragt und/oder wobei insbesondere das U-förmige Profil 25 eine Aufspreizung x, insbesondere ein Abstand zwischen den äußersten Enden der U-Flügel des -förmigen Profils, aufweist, die größer ist als ein Innendurchmesser d des Basisbauteils 10, 10'. Zu einem Einschieben des Klemmelements 20 in die röhrenartige Ausnehmung 11, 11' werden die Flügel leicht nach innen ausgelenkt, damit das U-förmige Profil 25 in die röhrenartige Ausnehmung 11, 11' passt. Durch eine Federkraft der Federflügel, die die Ausfallenden des U-förmigen Profils 25 auseinandertreibt, wird der Fixierbereich 27 nun in der röhrenartigen Ausnehmung 11, 11' fixiert. Ein Überstand a der Auslaufenden des U-förmigen Profils 25 sollte hierbei inklusive der Fertigungstoleranzen größer als Null sein, um einen sicheren Halt zu ermöglichen.

Beispielsweise wird das Klemmelement 20 hierbei mit der flexiblen Zunge 22 voran und mit dem Fixierbereich 27 folgend in die röhrenartige Ausnehmung 11, 11' eingeführt. Beispielsweise weist das Klemmelement 20 eine Längserstreckung zwischen 5 mm und 30 mm, insbesondere zwischen 5 mm und 15 mm auf. Insbesondere ist die Anschlagkante 24 zwischen 4 mm und 30 mm, insbesondere zwischen 5 mm und 15 mm, tief in der röhrenartigen Ausnehmung 11, 11' angeordnet. Eine Länge des elastisch verformbaren Bereichs 21 (auch Federbereich genannt) ist so ausgelegt, dass Materialquerschnitt (Dicke des Materials und Breite t) gegen Knicken resistent sind, jedoch dauerfest gegen Biegespannung durch Verklemmen.

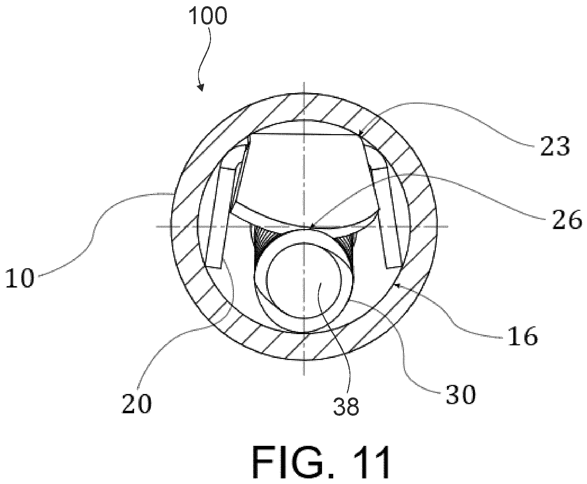

Eine Breite s (vgl. Fig. 7) des Klemmflügels der flexiblen Zunge 22 ist in Abhängigkeit zum Innendurchmesser d (vgl. Fig. 9) der röhrenartigen Ausnehmung 11, 11' im Basisbauteil 10, 10' so ausgelegt, dass das Einführen des Steckelements 39 zu einem Verklemmen des Klemmbereichs 31 führt. Die Verklemmung findet zwischen dem Klemmbereich 31 und der Anschlagkante 24 an einem Klemmpunkt 26, sowie zwischen flexibler Zunge 22, insbesondere dem Klemmflügel, und einer Innenfläche 16 der röhrenartigen Ausnehmung 11, 11' an einem Kontaktpunkt 23 statt (vgl. Fig. 11).

Die Anschlagkante 24 kann so ausgelegt sein, dass ein Abstand b zwischen Anschlagkante 24 und Innenfläche 16 der röhrenartigen Ausnehmung 11, 11' eine konkave Kontur ausbildet. Insbesondere hat die Anschlagkante 24 einen größeren Radius als der Innendurchmesser des Basisbauteils 10, 10' wodurch insbesondere eine Verklemmung im Randbereich, wenn beispielsweise das Klemmelement nach links oder rechts zieht verstärkt ist. Alternativ kann die Anschlagkante auch so geformt sein, dass ein Abstand zwischen der Anschlagkante und der Innenfläche des Basisbauteils konstant ist.

Ein Abstand b (vgl. Fig. 10) ist vorzugsweise so ausgelegt, dass ein Verklemmen des Klemmbereichs 31 im eingeführten Zustand möglich ist. Insbesondere ist ein Abstand b kleiner als eine Dicke (ein Außen-Durchmesser) des Klemmbereichs 31. Insbesondere liegt die Dicke des Klemmbereichs 31 bei etwa einem Zweifachen eines Durchmessers der Drähte 34, 35, 36, 37. Die Drähte 34, 35, 36, 37 weisen beispielsweise einen Durchmesser zwischen 0,25 mm und 2 mm auf. Ein Durchmesser der Drähte 34, 35, 36, 37 korreliert hierbei vorzugsweise mit einem Durchmesser der röhrenartigen Ausnehmung 11, 11' und/oder einem Durchmesser der als Rohr ausgebildeten Basisbauteile 10, 10', so dass insbesondere für größere Ausnehmungen 11, 11' auch Verbindungsbauteile 30 mit dickeren Drähten 34, 35, 36, 37 zum Einsatz kommen.

Der Abstand b darf hierbei nicht zu klein gewählt werden, sonst verbiegt sich der Klemmflügel der flexiblen Zunge 22 zu sehr, und die Klemmkraft ist zu gering (Anstellwinkel y würde zu klein werden). Der Abstand b darf jedoch auch nicht größer als der Außen-Durchmesser des Klemmbereichs 31 gewählt werden, sonst wird das Steckelement 39 nicht geklemmt/gehalten.

Die röhrenartige Ausnehmung 11, 11' weist einen nach außen, also zu einer Öffnung 13, hin kleiner werdenden Innenquerschnitt auf. Dies wird bei einer Herstellung des Basisbauteils 10, 10' dadurch erreicht, dass nach einer Einführung des Klemmelements 20 das Basisbauteil 10, 10' im Bereich der Öffnung 13 verdrückt wird, so dass sich dieses nach innen hin verformt und die Öffnung 13 verkleinert wird.

Fig. 8 zeigt beispielsweise ein als Rundrohr ausgebildetes Basisbauteil 10, wobei in beide Enden 12 des Basisbauteils 10 Klemmelemente 20 eingeführt wurden. Anschließend wurden die Enden 12 verdrückt und bilden Öffnungen 13 aus, durch die Steckelemente 39 der Verbindungsbauteile 30 in eine jeweilige röhrenartige Ausnehmung 11, 11' eingeführt werden können.

Alternativ kann ein Klemmelement 20a in ein Basisbauteil 10a integriert sein (vgl. Fig. 17a-c). Beispielsweise ist das Basisbauteil 10a hierbei von einem Federwerkstoff, insbesondere einer Aluminium- und/oder einer Kupferlegierung, z.B. Kupfer-Beryllium gebildet. Insbesondere wird das Klemmelement 20a mittels eines Stanzprozesses aus dem Basisbauteil 10a herausgeformt.

Figuren 19a-19c zeigen den Prozess des Einführens des Steckelements 39 in die röhrenartige Ausnehmung 11 und das Verklemmen des Steckelements 39 zwischen dem Klemmelement 20 und dem Basisbauteil 10. Ab Erreichen einer bestimmten Einführlänge (Fig. 19a) wird die flexible Zunge 22 des Klemmelements 20 erst durch den Führungsbereich 38, dann durch den Klemmbereich 31 ausgelenkt. Je nach Einstecktiefe (Fig. 19b und 19c) rastet die Anschlagkante 24 des Klemmelements 20 in unterschiedlichen Windungen des Klemmbereichs 31 ein und sorgt so für eine Formschlussverbindung.

Das Steckelement 39 kann aus dem Basisbauteil 10 gelöst werden, indem es relativ zum Basisbauteil 10 um die Längsachse, insbesondere des Basisbauteils 10, gedreht wird. Alternativ kann das Basisbauteil 10 um die Längsachse gedreht werden. Falls das Basisbauteil 10 hierbei in einem Modell 110 verbaut ist (vgl. Fig. 15 und 16), löst sich eine Seite der Rohreinheit durch Drehen in eine Richtung, die Gegenseite wird weiter verspannt und der Klemmflügel der Gegenseite springt in die nächste Spiralumdrehung des Klemmbereichs 31 der Gegenseite. Im Anschluss kann die Gegenseite durch Drehen in die andere Richtung gelöst werden.

Figuren 15 und 16 zeigen das Modell 110, das aus dem Verbindungssystem 100 gebildet ist. Das Verbindungssystem 100 umfasst hierbei eine Anzahl von Verbindungsbauteilen 40 mit jeweils vier Steckelementen. Das Verbindungssystem 100 umfasst hierbei weiterhin Basisbauteile 10, 10' unterschiedlicher Ausdehnungen und/oder Ausgestaltungen, insbesondere unterschiedlicher Längen. Weiterhin kann das Verbindungssystem 100 eine Vielzahl unterschiedlicher Verbindungsbauteile mit unterschiedlicher Anzahl an Steckelementen aufweisen.

## Patentansprüche

1. Modellbauverbindungssystem aufweisend zumindest zwei röhrenartig ausgebildete Basisbauteile (10), die jeweils zumindest eine röhrenartige Ausnehmung (11) aufweisen, und zumindest ein Verbindungsbauteil (30), das zumindest zwei Steckelemente (39) aufweist, die jeweils zumindest teilweise aus zumindest einem Draht (34, 35, 36, 37) gebildet sind und die dazu vorgesehen sind, in eine entsprechende der röhrenartigen Ausnehmungen (11) der Basisbauteile (10) eingesteckt zu werden, um die zwei Basisbauteile (10) zumindest mechanisch miteinander zu verbinden, wobei die Steckelemente (39) des Verbindungsbauteils (30) beweglich, insbesondere biegbar, zueinander befestigt und/oder angeordnet sind, wobei die Basisbauteile (10) jeweils zumindest ein Klemmelement (20) aufweisen, das in der zumindest einen röhrenartigen Ausnehmung (11) angeordnet ist und das dazu vorgesehen ist, eines der Steckelemente (39) in der röhrenartigen Ausnehmung (11) kraftschlüssig und/oder formschlüssig zu fixieren und zu verklemmen.

2. Modellbauverbindungssystem nach Anspruch 1, **dadurch gekennzeichnet, dass** zumindest eines der Steckelemente (39) einen Klemmbereich (31) aufweist, der von einer Verdrillung von zwei miteinander verdrillten Drahtbereichen des zumindest einen Drahts (34, 35, 36, 37) gebildet ist.

3. Modellbauverbindungssystem nach Anspruch 2, **dadurch gekennzeichnet, dass** das Klemmelement (20) zumindest eine flexible Zunge (22) aufweist, die dazu vorgesehen ist, bei Einführung des Steckelements (39) lateral ausgelenkt zu werden, wobei die flexible Zunge (22) eine Anschlagkante (24) aufweist, die derart abgewinkelt und angeordnet ist, dass diese in einen durch die Verdrillung der Drahtbereiche erzeugten Gewindegang eingreift.

4. Modellbauverbindungssystem nach Anspruch 2 oder 3, **dadurch gekennzeichnet, dass** die zwei Drahtbereiche von einem gleichen Drahtstück gebildet sind.

5. Modellbauverbindungssystem nach einem der Ansprüche 2 bis 4, **dadurch gekennzeichnet, dass** das Steckelement (39) einen Führungsbereich (38) aufweist, der an einem äußeren Ende des Steckelements (39) angeordnet ist und in dem der zumindest eine Draht (34, 35, 36, 37) unverdrillt vorliegt.

6. Modellbauverbindungssystem nach einem der vorhergehenden Ansprüche, **dadurch gekennzeichnet, dass** die zwei Steckelemente (39) zumindest einen gemeinsamen Draht (34, 35, 36, 37) aufweisen.

7. Modellbauverbindungssystem nach Anspruch 6, **dadurch gekennzeichnet, dass** das Verbindungsbauteil (30) genau einen Draht (37) aufweist.

8. Modellbauverbindungssystem nach einem der vorhergehenden Ansprüche, **dadurch gekennzeichnet, dass** die Basisbauteile (10) als Rohre, insbesondere als Rundrohre und/oder als Profilrohre, ausgebildet sind.

9. Modellbauverbindungssystem nach einem der vorhergehenden Ansprüche, **dadurch gekennzeichnet, dass** die röhrenartige Ausnehmung (11') einen nach außen hin kleiner werdenden Innenquerschnitt aufweist.

10. Modellbauverbindungssystem nach einem der vorhergehenden Ansprüche, **dadurch gekennzeichnet, dass** die zwei Steckelemente (39) des Verbindungbauteils beweglich, insbesondere biegbar, zueinander befestigt und/oder angeordnet sind, wobei insbesondere ein kleinster einstellbarer Öffnungswinkel zwischen den zwei Steckelementen (39) kleiner ist als 30 °.

11. Modellbauverbindungssystem nach einem der vorhergehenden Ansprüche, **dadurch gekennzeichnet, dass** das Klemmelement (20) kraft- und/oder formschlüssig in der röhrenartigen Ausnehmung (11) des Basisbauteils (10) fixiert ist.

## Claims

1. Model construction connection system, comprising
at least two base components (10) which are realized in a tube shape and in each case have at least one tubular recess (11),
and at least one connection component (30) comprising at least two plug elements (39) which are in each case formed at least partly from at least one wire (34, 35, 36, 37) and are configured to be plugged into a corresponding tubular recess (11) of the tubular recesses (11) of the base components (10) in order to at least mechanically connect the two base components (10) to one another, wherein the plug elements (39) of the connection component (30) are fastened and/or arranged so as to be movable, in particular flexible, with respect to one another,
wherein the base components (10) in each case comprise at least one clamping element (20), which is arranged in the at least one tubular recess (11) and is configured to fix and to clamp one of the plug elements (39) in the tubular recess (11) in a force-fitting and/or form-fitting manner.

2. Model construction connection system according to claim 1,
**characterized in that** at least one of the plug elements (39) has a clamping region (31) formed by a twisting of two wire regions of the at least one wire (34, 35, 36, 37) which are twisted with one another.

3. Model construction connection system according to claim 2,
**characterized in that** the clamping element (20) comprises at least one flexible tongue (22) configured to be laterally deflected when the plug element (39) is inserted, the flexible tongue (22) having an abutment edge (24) that is angled and arranged in such a way that it engages in a thread which is created by the twisting of the wire regions.

4. Model construction connection system according to claim 2 or 3, **characterized in that** the two wire regions are formed by a same wire piece.

5. Model construction connection system according to any one of claims 2 to 4, **characterized in that** the plug element (39) comprises a guide region (38), which is arranged at an outer end of the plug element (39) and in which the at least one wire (34, 35, 36, 37) is present in a non-twisted form.

6. Model construction connection system according to any one of the preceding claims,
**characterized in that** the two plug elements (39) have at least one common wire (34, 35, 36, 37).

7. Model construction connection system according to claim 6,
**characterized in that** the connection component (30) comprises precisely one wire (37).

8. Model construction connection system according to any one of the preceding claims,
**characterized in that** the base components (10) are realized as tubes, in particular as round tubes and/or as profile tubes.

9. Model construction connection system according to any one of the preceding claims,
**characterized in that** the tubular recess (11') has an inner cross-section that decreases towards an outside.

10. Model construction connection system according to any one of the preceding claims,
**characterized in that** the two plug elements (39) of the connection component are fastened and/or arranged so as to be movable, in particular flexible, with respect to one another,
wherein in particular a smallest adjustable opening angle between the two plug elements (39) is smaller than 30°.

11. Model construction connection system according to any one of the preceding claims,
**characterized in that** the clamping element (20) is fixed in the tubular recess (11) of the base component (10) in a force-fitting and/or form-fitting manner.

## Revendications

1. Système de liaison de modélisme, présentant
au moins deux composants de base (10) qui sont réalisés en forme de tube et ont respectivement au moins un évidement tubulaire (11),
et au moins un composant de liaison (30) comprenant au moins deux éléments d'enfichage (39) qui sont à chaque fois formés au moins partiellement à partir d'au moins un fil (34, 35, 36, 37) et sont prévus pour être enfichés dans un évidement correspondant des évidements tubulaires (11) des composants de base (10) afin de raccorder au moins mécaniquement les deux composants de base (10) l'un avec l'autre,
où les éléments d'enfichage (39) du composant de liaison (30) sont fixés et/ou disposés de telle manière qu'ils sont mouvables, en particulier flexibles, l'un par rapport à l'autre,
où les composants de base (10) comprennent respectivement au moins un élément de serrage (20) qui est disposé dans l'au moins un évidement tubulaire (11) et est prévu pour fixer et serrer par adhérence et/ou par obstacle l'un des éléments d'enfichage (39) dans l'évidement tubulaire (11).

2. Système de liaison de modélisme selon la revendication 1,
**caractérisé en ce qu'**au moins l'un des éléments d'enfichage (39) comprend une zone de serrage (31) formée par une torsion de deux zones de fil torsadées l'une avec l'autre de l'au moins un fil (34, 35, 36, 37).

3. Système de liaison de modélisme selon la revendication 2,
**caractérisé en ce que** l'élément de serrage (20) comprend au moins une languette flexible (22) prévue pour être déviée latéralement lors de l'introduction de l'élément d'enfichage (39),
la languette flexible (22) ayant une arête de butée (24) qui est coudée et disposée de telle manière qu'elle s'engage dans un pas de filet créé par la torsion des zones de fil.

4. Système de liaison de modélisme selon la revendication 2 ou 3,
**caractérisé en ce que** les deux zones de fil sont formées d'une même pièce de fil.

5. Système de liaison de modélisme selon l'une quelconque des revendications 2 à 4,
**caractérisé en ce que** l'élément d'enfichage (39) comprend une zone de guidage (38) qui est disposée à une extrémité extérieure de l'élément d'enfichage (39) et dans laquelle l'au moins un fil (34, 35, 36, 37) est présent sans torsion.

6. Système de liaison de modélisme selon l'une quelconque des revendications précédentes,
**caractérisé en ce que** les deux éléments d'enfichage (39) comprennent au moins un fil (34, 35, 36, 37) commun.

7. Système de liaison de modélisme selon la revendication 6,
**caractérisé en ce que** le composant de liaison (30) comprend exactement un fil (37).

8. Système de liaison de modélisme selon l'une quelconque des revendications précédentes,
**caractérisé en ce que** les composants de base (10) sont réalisés sous forme de tubes, en particulier sous forme de tubes ronds et/ou de tubes profilés.

9. Système de liaison de modélisme selon l'une quelconque des revendications précédentes,
**caractérisé en ce que** l'évidement tubulaire (11') présente une coupe transversale intérieure qui diminue vers l'extérieur.

10. Système de liaison de modélisme selon l'une quelconque des revendications précédentes,
**caractérisé en ce que** les deux éléments d'enfichage (39) du composant de liaison sont fixés et/ou disposés de telle manière qu'ils sont mouvables, en particulier flexibles, l'un par rapport à l'autre,
où en particulier un plus petit angle d'ouverture réglable entre les deux éléments d'enfichage (39) est inférieur à 30°.

11. Système de liaison de modélisme selon l'une quelconque des revendications précédentes,
**caractérisé en ce que** l'élément de serrage (20) est fixé par adhérence et/ou par obstacle dans l'évidement tubulaire (11) du composant de base (10).
